# EUROPÄISCHE PATENTSCHRIFT

(11) **EP 0 519 181 B1**
(45) Veröffentlichungstag und Bekanntmachung des Hinweises auf die Patenterteilung: **31.01.1996**
(21) Anmeldenummer: 92106838.3
(22) Anmeldetag: 22.04.1992
(51) Int. Cl.: C07F 7/14, C07F 7/08

(54) **Verfahren zur Herstellung von 3-Chlorpropylsilanen**
Preparation of 3-chloropropylsilanes
Préparation de 3-chloropropylsilanes

(30) Priorität: 18.06.1991 DE 4119994
(43) Veröffentlichungstag der Anmeldung: 23.12.1992
(73) Patentinhaber: HÜLS AKTIENGESELLSCHAFT, D-45764 Marl (DE)
(72) Erfinder: Seiler, Claus-Dietrich, Dr., W-7888 Rheinfelden (DE); Hange, Willy, W-7851 Wittlingen (DE); Lillig, Bernhard, Dr., W-7888 Rheinfelden (DE); Matthes, Reinhard, Dr., W-7888 Rheinfelden (DE); Schön, Uwe, Dr., W-7888 Rheinfelden (DE)

(56) Entgegenhaltungen:
- EP-A- 0 152 803
- DE-B- 2 815 316
- FR-A- 2 084 564
- US-A- 4 292 433

## Beschreibung

Gegenstand der vorliegenden Erfindung ist ein Verfahren zur platin-katalysierten Herstellung von 3-Chlorpropylsilanen aus Hydrogensilanen und Allylchlorid.

Es ist bekannt, Hydrogensilane mit Allylchlorid in Gegenwart von Platinverbindungen oder metallischem Platin, die in Substanz oder auf unterschiedlichste Substrate aufgetragen vorliegen können, zu 3-Chlorpropylsilanen umzusetzen. Solche Umsetzungen werden z. B. in den DE-PS 20 12 229 und 28 15 316 beschrieben. Es ist weiterhin bekannt, daß bei der Umsetzung von Allylchlorid mit Hydrogensilanen zu 3-Chlorpropylsilanen ein Teil des eingesetzten Allylchlorids mit dem Hydrogensilan in einer als Beta-Spaltung bezeichneten Nebenreaktion unter Bildung von Propylen und des dem Jeweiligen Hydrogensilan entsprechenden Chlorsilans reagiert. So werden z. B. bei der Umsetzung von Allylchlorid mit Trichlorsilan ca. 36 Mol-% des zur Reaktion gelangenden Allylchlorids durch Beta-Spaltung in Propylen verwandelt, begleitet von der Bildung äquivalenter Mengen an Siliciumtetrachlorid. Der Umfang dieser Nebenreaktion ist nur begrenzt beeinflußbar. Durch spezielle Reaktionsführung in Druckapparaturen kann die Propylenbildung gemindert werden; jedoch hat diese Arbeitsweise zur Folge, daß das im Rahmen der Beta-Spaltung anfallende Propylen quantitativ zu den Propylsilanen, die den eingesetzten Hydrogensilanen entsprechen, weiterreagiert. Auch bei den unter Normaldruck in der üblichen Art durchgeführten Reaktionen setzt sich in beträchtlichem Umfang das aus der Beta-Spaltung stammende Propylen mit Hydrogensilan zu den entsprechenden Propylsilanen um. So werden z. B. in einer technischen Anlage bei einer heterogen-katalytischen Umsetzung von Allylchlorid und Trichlorsilan in einer mit platinierter Aktivkohle gefüllten Säule pro 1 000 kg 3-Chlorpropyltrichlorsilan bis zu 230 kg Propyltrichlorsilan erhalten, was einen Mehrbedarf von ca. 28 % an Trichlorsilan, bezogen auf die ins Zielprodukt eingegangene Trichlorsilan-Menge, bedeutet.

Während die im Rahmen der Beta-Spaltung stöchiometrisch zum Propylenanfall gebildeten Chlorsilane, z. B. Siliciumtetrachlorid bei Verwendung von Trichlorsilan als Hydrogensilan-Komponente, sich aus dem jeweils anfallenden Reaktionsgemisch wegen der großen Siedepunktdifferenzen von den anderen Komponenten destillativ einfach abtrennen lassen, ist die Abtrennung der entsprechenden Propylsilane von den 3-Chlorpropylsilan-Zielprodukten nur mit hohem destillativen Aufwand möglich. Weiterhin gibt es für die meisten Propylsilane, wie z. B. Methylpropyldichlorsilan, Ethylpropyldichlorsilan, Dimethylpropylchlorsilan, bisher kaum Einsatzgebiete, wodurch deren kostenintensive Entsorgung ansteht. Es bestand deshalb das Problem, die Bildung von Propylsilanen bei der Synthese von 3-Chlorpropylsilanen zu minimieren bzw. vollständig zu unterdrücken. Dieses Problem wurde durch das Verfahren gelöst, welches durch die in Anspruch 1 genannte Maßnahme gekennzeichnet ist. Die erfindungsgemäße Verfahrensweise ist bei Normäldruck und Unterdruck durchführbar. Bevorzugt wird bei Normaldruck gearbeitet.

Die Durchführung der erfindungsgemäßen Verfahrensweise erfolgt zweckmäßigerweise derart, daß man das Allylchlorid in einem geeigneten Gefäß zum Sieden erhitzt und den dabei gebildeten Dampf in eine geeignete Kühlvorrichtung leitet, in der er kondensiert wird. Das Kondensat wird aus der Kühlvorrichtung auf das platinierte Trägermaterial geleitet. Dem siedenden Allylchlorid wird das Hydrogensilan kontinuierlich mit einer der Umsetzungsgeschwindigkeit des Systems Allylchlorid/Hydrogensilan laufend angepaßten Dosiergeschwindigkeit, die ggf. in Vorversuchen zu ermitteln ist, zugesetzt, so daß im an der Kühlvorrichtung anfallenden Kondensat während der gesamten Reaktionszeit Allylchlorid in stöchiometrischem Überschuß, bezogen auf die Hydrogensilan-Komponente, vorliegt. Vorzugsweise beträgt dabei das Molverhältnis Allylchlorid zu Hydrogensilan mindestens 3 : 1. Unterschreitung dieses Verhältnisses hat in geringem Umfang die Bildung von Propylsilanen zur Folge, die jedoch bezüglich ihrer Absolutmenge vernachlässigbar sind, solange Allylchlorid im Kondensat gegenüber der Hydrogensilan-Komponente im stöchiometrischen Überschuß vorliegt. Die Zugabe des Hydrogensilans zum vorgelegten Allylchlorid kann aber auch diskontinuierlich vorgenommen werden, wobei mit dem Fortschreiten der Umsetzung die zugegebenen Hydrogensilan-Portionen entsprechend der Abnahme des Allylchlorid-Gehaltes im Vorlagegefäß angepaßt zu verkleinern sind.

Die als Ausgangskomponente erfindungsgemäß einsetzbaren Hydrogensilane umfassen Hydridosilane und Organosilane, die nur Organogruppen und Wasserstoffatome als Substituenten des Siliciums enthalten, sowie Organo-H-halogen- und Organo-H-alkoxysilane. Beispiel für ein Hydridosilan ist Trichlorsilan. Als Organo-H-halogensilane seien Hethylbydrogendichlorsilan, Ethylhydrogendichlorsilan und Dimethylbydrogenchlorsilan genannt. Unter die erfindungsgemäß einsetzbaren Organo-H-alkoxysilane fallen Verbindungen wie z. B. Trimethoxyhydrogensilan und Methylhydrogendimethoxysilan. Einsetzbare Hydrogensilane sind auch Trimethylhydrogen- und Triethylhydrogensilan.

Bevorzugt werden Hydridosilane, wie Trichlorsilan, und gemischt substituierte Hydrogensilane erfindungsgemäß umgesetzt, wobei einer der Substituenten Halogen ist, wie z. B. Methyl-, Ethyl- und Propylhydrogendichlorsilan und Dimethylhydrogenchlorsilan.

### Beispiel 1 (Vergleichsbeispiel)

Ein 2-Liter-Fünfhalskolben wird in eine Heizhaube eingesetzt. In den mittleren der fünf Stutzen wird eine 20 cm lange Glasröhre (Innendurchmesser etwa 4,5 cm) eingesetzt, an deren oberem Ende eine Schliffhülse und an deren unterem Ende, das zugeschmolzen ist, ein Schliffkern angeschmolzen sind. Über dem Schliffkern ist im Inneren des Rohres ein Glasrost eingeschmolzen, auf dem der Katalysator ruht. Weiterhin befinden sich in dem Glasrohr zwei eingeschmolzene Glasrohrstutzen (Durchmesser = 1 cm), und zwar einer unterhalb des den Katalysator tragenden Glasrostes, der andere unterhalb der Schliffhülse am oberen Ende des Rohres. Von einem der Stutzen des Fünfhalskolbens besteht eine Glasrohrverbindung zum oberen der beiden Glasrohrstutzen des den Katalysator fassenden Rohres. Von einem weiteren Stutzen des Fünfhalskolbens ist eine Glasrohr-Verbindung zu einem Schenkel eines U-Rohres (Durchmesser = 1 cm) geschaffen; der andere Schenkel des U-Rohres ist über ein Glasrohr mit dem unteren Glasrohr-Stutzen des Katalysator-Trägerrohres (unterhalb des Glasrostes befindlich) verbunden. Auf das den Katalysator enthaltende Rohr wird ein Intensivkühler aufgesetzt. Das System wird nach außen hin durch eine Stickstoffspülung abgeschlossen. In einen der äußeren Kolbenstutzen wird ein Thermometer, in einen weiteren ein Tropftrichter eingesetzt. In die für die Aufnahme des Katalysators vorgesehene Glasröhre werden 150 ml eines über längere Zeit eingefahrenen Aktivkoble-Kontakts eingefüllt, der einen Platin-Gehalt von 0,1 Gew.-% besitzt (Körnung 1 bis 2 mm, Schüttgewicht 450 g/l). Unter einem eingefahrenen Kontakt wird dabei ein solcher Katalysator verstanden, der durch Einsatz in einer großtechnischen Anlage-sein Maximum an Wirksamkeit erreicht hat. Der 2-Liter-Kolben wird über den Tropftrichter mit 4,4 mol (596 g) Trichlorsilan und 4,0 mol (306 g) Allylchlorid beschickt, der Kühler mit einer Kältelösung von - 32 °C gespeist. Durch Erwärmen des Kolbens wird der Katalysator von oben mit an der Kühleroberfläche kondensierten Einsatzprodukten berieselt. Der Heizstrom wird so reguliert, daß das System unter gleichmäßigem Rückfluß verbleibt. Nach einer 27-stündigen Reaktionszeit wird der Versuch abgebrochen, das entstandene Sumpfprodukt gaschromatographisch untersucht und destillativ aufgearbeitet.

Das Gaschromatogramm weist 3-Chlorpropyltrichlorsilan neben Propyltrichlorsilan und unumgesetztem Allylchlorid aus.

Die destillative Aufarbeitung des Sumpfproduktes erbringt neben 543 g 3-Chlorpropyltrichlorsilan eine Menge von 109 g Propyltrichlorsilan. Dies entspricht einer Menge von 200 g Propyltrichlorsilan, bezogen auf 1 000 g 3-Chlorpropyltrichlorsilan, und damit einem zusätzlichen Verbrauch von 152 g Trichlorsilan pro 1 000 g 3-Chlorpropyltrichlorsilan.

### Beispiel 2 (Vergleichsbeispiel)

Der 2-Liter-Kolben wird mit 4,4 mol (596 g) Trichlorsilan beschickt, der Kühler mit einer Kältesole von - 32 °C gespeist. Durch Erwärmen des Kolbens wird der Katalysator von oben mit kondensiertem Trichlorsilan beaufschlagt. Nach Eintritt von kräftiger Kondensatbildung am Kühler wird der Heizstrom so reguliert, daß das System unter gleichmäßigem Rückflüß verbleibt. Ab diesem Zeitpunkt wird mit der Zugabe von Allylchlorid aus dem Tropftrichter begonnen. Im Verlauf von 24 Stunden werden im Abstand von 4 Stunden 7 Portionen zu jeweils 43 g (0,57 mol) Allylchlorid zugesetzt.

Anschließend wird in einer 3-stündigen Nachreaktionsphase die Umsetzung zu Ende geführt. Das gebildete Sumptprodukt wird gaschromatographisch untersucht und anschließend destillativ aufgearbeitet.

Das Gaschromatogramm weist 3-Chlorpropyltrichlorsilan neben Propyltrichlorsilan und unumgesetztem Allylchlorid auf.

Die destillative Aufarbeitung des Sumpfproduktes erbringt neben 545 g 3-Chlorpropyltrichlorsilan eine Menge von 107 g Propyltrichlorsilan. Dies entspricht einer Menge von 196 g Propyltrichlorsilan, bezogen auf 1 000 g 3-chlorpropyltrichlorsilan, und damit einem zusätzlichen Verbrauch von 149 g Trichlorsilan pro 1 000 g 3-Chlorpropyltrichlorsilan.

### Beispiel 3 (Vergleichsbeispiel)

Der in Beispiel 1 beschriebene Versuch wird wiederholt unter Einsatz von 4,8 mol (650 g) Trichlorsilan und 4,0 mol (306 g) Allylchlorid.

Das Gaschromatogramm des gebildeten Sumpfproduktes weist 3-Chlorpropyltrichlorsilan neben Propyltrichlorsilan und Trichlorsilan aus (Allylchlorid wird nicht mehr nachgewiesen).

Die destillative Aufarbeitung des Sumpfproduktes erbringt neben 577 g 3-Chlorpropyltrichlorsilan eine Menge von 132 g Propyltrichlorsilan. Dies entspricht einer Menge von 229 g Propyltrichlorsilan, bezogen auf 1 000 g 3-Chlorpropyltrichlorsilan, und damit einem zusätzlichen Verbrauch von 175 g Trichlorsilan pro 1 000 g 3-Chlorpropyltrichlorsilan.

### Beispiel 4 (Vergleichsbeispiel)

Der in Beispiel 1 beschriebene Versuch wird wiederholt unter Einsatz von 4,8 mol (552 g) Methylhydrogendichlorsilan und 4,0 mol (306 g) Allylchlorid.

Das Gaschromatogramm des Sumpfproduktes weist 3-Chlorpropylmethyldichlorsilan neben Propylmethyldichlorsilan und Methylhydrogendichlorsilan aus.

Die destillative Aufarbeitung des Sumpfproduktes erbringt neben 519 g 3-Chlorpropylmethyldichlorsilan eine Menge von 68 g Propylmethyldichlorsilan. Dies entspricht einer Menge von 131 g Propylmethyldichlorsilan, bezogen auf 1 000 g 3-Chlorpropylmethyldichlorsilan, und damit einem zusätzlichen Verbrauch von 96 g Methylhydrogendichlorsilan pro 1 000 g 3-Chlorpropylmethyldichlorsilan.

### Beispiel 5

Der in Beispiel 2 beschriebene Versuch wird wiederholt. Anstelle von Trichlorsilan werden 4,0 mol (306 g) Allylchlorid vorgelegt. Im Verlauf von 24 Stunden werden im Abstand von jeweils 2,7 Stunden 10 Portionen zu 55,6 g (0,41 mol) Trichlorsilan aus dem Tropftrichter zugesetzt. Nach Abschluß der Nachreaktionsphase wird das Sumpfprodukt gaschromatographisch untersucht und destillativ aufgearbeitet.

Das Gaschromatogramm weist 3-Chlorpropyltrichlorsilan neben Propyltrichlorsilan und Trichlorsilan aus.

Die destillative Aufarbeitung des Sumpfproduktes erbringt neben 577 g 3-Chlorpropyltrichlorsilan eine Menge von 7,1 g Propyltrichlorsilan. Dies entspricht einer Menge von 12 g Propyltrichlorsilan, bezogen auf 1 000 g 3-Chlorpropyltrichlorsilan, und damit einem zusätzlichen Verbrauch von nur 9 g Trichlorsilan pro 1 000 g 3-Chlorpropyltrichlorsilan.

### Beispiel 6

Der in Beispiel 5 beschriebene Versuch wird wiederholt. In den 2-Liter-Kolben werden 4,0 mol (306 g) Allylchlorid vorgelegt. Im Verlauf von 24 Stunden werden 4,0 mol (542 g) Trichlorsilan kontinuierlich zudosiert.

Nach Abschluß der Nachreaktionsphase (1 Stunde) wird das Sumpfprodukt gaschromatographisch untersucht und destillativ aufgearbeitet.

Das Gaschromatogramm weist 3-Chlorpropyltrichlorsilan neben Spurenmengen an Trichlorsilan, Allylchlorid und Propyltrichlorsilan aus.

Die destillative Aufarbeitung des Sumpfproduktes erbringt 577 g 3-Chlorpropyltrichlorsilan.

### Beispiel 7

Der in Beispiel 6 beschriebene Versuch wird wiederholt. Den in dem 2-Liter-Kolben vorgelegten 4,0 mol (306 g) Allylchlorid werden anstelle von 4,0 mol Trichlorsilan 4,0 mol (460 g) Methylhydrogendichlorsilan zudosiert.

Nach Abachluß der Nachreaktionsphase wird das Sumpfprodükt gaschromatographisch untersucht und destillativ aufgearbeitet.

Das Gaschromatogramm weist 3-Chlorpropylmethyldichlorsilan neben Spurenmengen von Allylchlorid, Methylhydrogentichlorsilan und Propylmethyldichlorsilan aus. Die destillative Aufarbeitung des Sumpfproduktes erbringt 519 g 3-Chlorpropylmethyldichlorsilan.

### Beispiel 8

Der in Beispiel 6 beschriebene Versuch wird wiederholt. Den in dem 2-Liter-Kolben vorgelegten 4,0 mol (306 g) Allylchlorid werden anstelle von 4,0 mol Trichlorsilan 4,0 mol (516 g) Ethylhydrogendichlorsilan zudosiert.

Nach Abschluß der Nachreaktionsphase wird das Sumpfprodukt gaschromatographisch untersucht und destillativ aufgearbeitet.

Das Gaschromatogramm weist 3-Chlorpropylethyldichlorsilan aus neben Spurenmengen von Allylchlorid, Ethylhydrogendichlorsilan und Propylethyldichlorsilan.

Die destillative Aufarbeitung des Sumpfproduktes erbringt 560 g 3-Chlorpropylethyldichlorsilan.

### Beispiel 9

Der in Beispiel 6 beschriebene Versuch wird wiederholt. Den in dem 2-Liter-Kolben vorgelegten 4,0 mol (306 g) Allylchlorid werden anstelle von 4,0 mol Trichlorsilan 4,0 mol (378 g) Dimethylhydrogenchlorsilan zudosiert.

Nach Abschluß der Nachreaktionsphase wird das Sumpfprodukt gaschromatographisch untersucht und destillativ aufgearbeitet.

Das Gaschromatogramm weist 3-Chlorpropyldimethylchlorsilan aus neben Spurenmengen von Allylchlorid, Dimethylhydrogenchlorsilan und Dimethylpropylchlorsilan.

Die destillative Aufarbeitung des Sumpfproduktes erbringt 465 g 3-Chlorpropyldimethylchlorsilan.

### Beispiel 10

Der in Beispiel 6 beschriebene Versuch wird wiederholt. Den in dem 2-Liter-Kolben vorgelegten 4,0 mol (306 g) Allylchlorid werden anstelle von 4,0 mol Trichlorsilan lediglich 3,5 mol (474 g) Trichlorsilan zudosiert.

Nach Abachluß der Nachreaktionsphase wird das Sumpfprodukt gaschromatographisch untersucht und destillativ aufgearbeitet.

Das Gaschromatogramm weist 3-Chlorpropyltrichlorsilan aus neben Allylchlorid. Propyltrichlorsilan wird nicht nachgewiesen.

Die destillative Aufarbeitung des Sumpfproduktes erbringt 497 g 3-Chlorpropyltrichlorsilan.

## Patentansprüche

1. Verfahren zur Herstellung von 3-Chlorpropylsilanen aus Hydrogensilanen und Allylchlorid bei einer Temperatur, die mindestens gleich der Siedetemperatur des höhersiedenden Reaktanten ist, durch Additionsreaktion an einem platinhaltigen, oberhalb des Reaktantengemisches befindlichen Trägermaterial, Überführung der Dämpfe des Reaktantengemisches unter Umgehung des Trägermaterials zu einem Kondensator und Ableitung des am Kondensator gebildeten Kondensats durch das Trägermaterial über eine Schleuse in das siedende Reaktantengemisch, dadurch gekennzeichnet, daß in dem am Kondensator gebildeten, auf das Trägermaterial abfließenden Kondensat Allylchlorid in stöchiometrischem Überschuß, bezogen auf die Hydrogensilan-Komponente, vorliegt.

2. Verfahren nach Anspruch 1, dadurch gekennzeichnet, daß in dem am Kondensator abfließenden Kondensat Allylchlorid mindestens in dreifachem molarem Überschuß vorliegt.

## Claims

1. Process for the production of 3-chloropropyl silanes from hydrogen silanes and allyl chloride at a temperature, which is at least equal to the boiling temperature of the higher-boiling reactants, by addition reaction at a platinum-containing carrier situated above the reactants mixture, transferring the vapours of the reactants mixture to a condenser, whilst by-passing the carrier, and drawing off the condensate formed at the condenser through the carrier via a sluice into the boiling reactants mixture, characterized in that allyl chloride is present in the condensate formed at the condenser flowing off on to the carrier in stoichiometric excess, relative to the hydrogen silane component.

2. Process according to Claim 1, characterized in that allyl chloride is present in the condensate flowing off at the condenser at least in threefold molar excess.

## Revendications

1. Procédé d'obtention de 3-chloropropylsilane à partir d'hydrogénosilane et de chlorure d'allyle à une température qui au moins est égale à la température d'ébullition des réactifs qui ont le point d'ébullition le plus élevé, par réaction d'addition sur un matériau support qui se trouve au-dessus du mélange de réactifs, renfermant du platine, transfert de la vapeur du mélange réactionnel tout en dérivant le matériau support vers un condenseur et déviation du condensat formé sur le condenseur par le matériau support, par un sas dans le mélange bouillant de réactifs, caractérisé en ce que dans le condensat formé sur le condenseur, qui s'écoule sur le matériau support, le chlorure d'allyle est introduit en excès par rapport à la stoechiométrie rapporté aux composants hydrogénosilane.

2. Procédé selon la revendication 1, caractérisé en ce que, dans le condensat qui s'écoule sur le condenseur, le chlorure d'allyle est introduit au moins en excès trois fois molaire.
